# EUROPÄISCHE PATENTSCHRIFT

(11) **EP 3 478 970 B1**
(45) Veröffentlichungstag und Bekanntmachung des Hinweises auf die Patenterteilung: **14.10.2020**
(21) Anmeldenummer: 17728877.6
(22) Anmeldetag: 12.06.2017
(51) Int. Cl.: F16B 5/02, F16B 29/00, F16B 37/06

(54) **BEFESTIGER MIT DÄMPFUNGSFUNKTION**
FASTENER HAVING A DAMPING FUNCTION
DISPOSITIF D'ASSEMBLAGE À FONCTION D'AMORTISSEMENT

(30) Priorität: 30.06.2016 DE 102016112014
(43) Veröffentlichungstag der Anmeldung: 08.05.2019
(73) Patentinhaber: Böllhoff Verbindungstechnik GmbH, 33649 Bielefeld (DE)
(72) Erfinder: FIGGE, Hans-Ulrich, 33758 Schloß Holte-Stukenbrock (DE); ZELMER, Viktor, 33719 Bielefeld (DE)
(74) Vertreter: HWP Intellectual Property
(86) Internationale Anmeldenummer: PCT/EP2017/064267
(87) Internationale Veröffentlichungsnummer: WO 2018/001710

(56) Entgegenhaltungen:
- DE-A1- 19 836 107
- DE-A1-102007 051 778
- DE-A1-102012 024 653
- DE-A1-102013 212 101
- DE-U1- 9 001 069
- DE-U1-202005 005 536
- US-A1- 2013 216 328

## Beschreibung

### 1. Gebiet der Erfindung

Die vorliegende Erfindung betrifft einen Befestiger mit Dämpfungsfunktion, mit dem mindestens ein erstes und ein zweites Bauteil über eine Schraubverbindung verbindbar sind. Des Weiteren betrifft vorliegende Erfindung eine Verbindung zumindest eines ersten und eines zweiten Bauteils mit dem oben genannten Befestiger sowie ein Verbindungsverfahren, mit dem die Bauteile mithilfe des Befestigers miteinander verbindbar sind. Zudem betrifft vorliegende Erfindung ein Herstellungsverfahren für den oben genannten Befestiger mit Dämpfungsfunktion.

### 2. Hintergrund der Erfindung

Im Stand der Technik sind verschiedene Befestiger mit Dämpfungsfunktion bekannt. So beschreibt beispielsweise DE 10 2007 041 949 B3 einen Befestiger mit Direktverschraubung in einem der miteinander zu verbindenden Bauteile. Im Speziellen werden hier ein erstes und ein zweites Bauteil miteinander verbunden, wobei eine Schraube in eine Gewindeöffnung des zweiten Bauteils eingeschraubt wird. Auf diese Weise wird das erste Bauteil zwischen dem Schraubenkopf und dem ersten Bauteil geklemmt. Um Schwingungen zu dämpfen, wird der Schraubenschaft in der Durchgangsöffnung des ersten Bauteils über eine äußere elastische Dämpfungshülse und eine innere Stützhülse gehalten. Die innere Stützhülse verhindert eine übermäßige axiale Kompression der äußeren Dämpfungshülse. Dadurch bleiben die Dämpfungseigenschaften der äußeren Dämpfungshülse erhalten, während gleichzeitig eine feste Verbindung zwischen Schraube und zweitem Bauteil gewährleistet ist. Sofern das zweite Bauteil jedoch nicht die für eine Schraubverbindung erforderliche Dicke oder Materialstabilität aufweist, ist diese Konstruktion von Befestiger nicht anwendbar. Des Weiteren wird das erste Bauteil in einem eher lockeren reibschlüssigen Sitz zwischen dem Radialkragen der Dämpfungshülse und dem zweiten Bauteil gehalten. Zwar lässt diese Anordnung die Schwingungsdämpfung von Schwingungen im zweiten Bauteil zu, ist aber insgesamt auf die Befestigung eines eventuell schwingenden Teils an einem festen Bauteil, wie beispielsweise einem Fahrzeugrahmen, ausgerichtet. Dies schränkt die Anwendungsbereiche dieses Befestigers ein.

DE 10 2006 023 320 A1 beschreibt die Verbindung von mindestens zwei Bauteilen mithilfe eines aus Kunststoff bestehenden Schraubblindniets. Dieser Schraubblindniet hat die Form eines Vier- oder sonstigen Mehrkantrohrs und wird in eine entsprechend formangepasste Öffnung im ersten und zweiten Bauteil eingesteckt. Durch Einschrauben einer selbstschneidenden Schraube faltet sich der Schraubblindniet quer zu seiner Längsrichtung und klemmt auf diese Weise die miteinander zu befestigenden Bauteile zwischen dem Schraubenkopf und der Faltung des Schraubblindniets ein. Zwar liefert der hier offenbarte Schraubblindniet eine ausreichende Stabilität zur Befestigung von zwei Bauteilen, die aber gleichzeitig eine verlässliche Schwingungsdämpfung im Rahmen dieser Verbindung ausschließt. Der Schraubblindniet besteht zwar aus Kunststoff, dem aber keinerlei Dämpfungseigenschaften zugeschrieben werden. Denn allein die Formstabilität des hier verwendeten Kunststoffs hält den Formschluss zwischen dem Schraubblindniet und der an dessen Außenkontur angepassten Öffnung im ersten und zweiten Bauteil aufrecht. Dabei widersteht der Schraubblindniet jeder Verformung bspw. gegen Torsion aufgrund des Eindrehens der Schraube in einen Eingriffsabschnitt des Schraubblindniets. Zwar wird durch den hier offenbarten Schraubblindniet eine schnelle und vom Teile- und Konstruktionsaufwand überschaubare Verbindung bereitgestellt, die jedoch einer Belastung durch Schwingungen aufgrund fehlender Dämpfungseigenschaften nicht standhält. In Abhängigkeit von Art, Frequenzbereich und Richtung der Schwingung führen diese zumindest zu einer raschen Schwächung der hier hergestellten Verbindung oder tragen zu einer unvorteilhaften Weiterleitung derartiger Schwingungen, beispielsweise als störender Lärm, bei.

Einen weiteren Befestiger in Form eines Blindniets beschreibt EP 1 710 454 A1. Dieser Blindniet besteht aus einem elastischen Außenkörper mit einem in ein Befestigungsloch eines Trägerteils einsteckbaren hülsenförmigen Schaft. Innerhalb der Durchgangsöffnung des elastischen Außenkörpers ist eine metallische Gewindebuchse angeordnet. Diese metallische Gewindebuchse befindet sich in einem axialen Endbereich des elastischen Außenkörpers, der einer Einschrauböffnung des elastischen Außenkörpers für eine Schraube abgewandt ist. Da die metallische Gewindebuchse fest mit dem Außenkörper verbunden ist, führt ein Einschrauben einer Schraube in das Gewinde der metallischen Gewindebuchse zu einem axialen Versatz der metallischen Gewindebuchse und somit des bauteilabgewandten axialen Endbereichs des Außenkörpers in Richtung der zu verbindenden Trägerteile. Eine durch diesen Versatz entstehende Faltung des elastischen Außenkörpers schließt das Trägerteil dämpfend ein. Zudem wird die metallische Gewindebuchse gegen das weitere Bauteil gezogen, um sich dort abzustützen. Zwar liefert der Außenkörper aufgrund seiner elastischen Materialeigenschaften gute Dämpfungseigenschaften, diese sind aber gleichzeitig mit einer mangelnden Stabilität gegen Torsionsbelastung beim Einschrauben der Befestigungsschraube verbunden. Dies kann gerade zu einer Torsion des Außenkörpers innerhalb der Öffnung des Trägerteils führen, was den Außenkörper in seiner radialen Ausdehnung verkleinert und somit die herzustellende Verbindung schwächt. Zudem kann auch das Einziehen der Gewindebuchse in die Öffnung des Trägerteils gerade bei einer nicht zentralen Ausrichtung der Gewindebuchse in Bezug auf die Öffnung im Trägerteil zu einer Beschädigung des elastischen Außenkörpers führen. Da eine derartige Beschädigung zumeist im Inneren des elastischen Außenkörpers vorliegt, ist sie von außen nicht erkennbar und äußert sich zunächst in einer verringerten Lebensdauer des hier offenbarten Blindniets.

DE 90 01 069 betrifft eine Blindnietmutter. Mit der innerhalb des Spannkörpers vor dem Gewindeelement liegenden Abstandshülse wird erreicht, dass beim Eindrehen der Schraube der Schließkopf des flexiblen Spannkörpers nur soweit ausgebildet werden kann, bis die Abstandshülse von dem Gewindeelement an die Rückseite des Anschraubteils angedrückt wird. Dabei ist die Länge der Abstandshülse so bemessen, dass einerseits ein sicher haltender Schließkopf ausgebildet wird, während andererseits ein zu starkes Zusammenquetschen des Spannkörpers vermieden wird. Legt sich die Abstandshülse an, so steigt das Drehmoment beim Eindrehen der Schraube spürbar an. Dies ist eine sichere Anzeige dafür, dass die Verbindung geschlossen ist, und gibt z.B. bei drehmomentgesteuerten Schrauben den Umschaltpunkt an.

Weitere Entkopplungselemente und Blindschraubmittel ergeben sich aus DE 10 2012 024 653 A1, US 2013/0216328 A1 sowie DE 10 2007 051 778 A1.

Eine Verbindungsanordnung zum schwingungsentkoppelten Verbinden zweier Bauteile wird in DE 198 36 107 A1 beschrieben. Die Verbindungsanordnung besteht aus einer Mutter, die an einer Öffnung des ersten Bauteiles festgelegt ist, einer Befestigungsbuchse, die in eine entsprechend ausgerichtete Öffnung des zweiten Bauteiles einsteckbar ist, und einer Schraube, die durch die Befestigungsbuchse hindurch in die Mutter einschraubbar ist. Die Befestigungsbuchse besteht aus einem hülsenförmigen Spannkörper eines elastisch verformbaren Werkstoffes und einem in den Spannkörper eingesetzten ringförmigen Stützelement eines härteren Werkstoffes. Wird die Schraube durch die Befestigungsbuchse hindurch in die Mutter eingeschraubt, so werden die beiden Bauteile gegeneinander gezogen und hierbei der hülsenförmige Spannkörper zu einem Ringwulst verformt, der zwischen den Bauteilen eingespannt ist und hierdurch für eine Schwingungsentkopplung der beiden Bauteile sorgt.

Bezogen auf die oben beschriebenen Nachteile des Standes der Technik ist es daher die Aufgabe vorliegender Erfindung, einen Befestiger mit Dämpfungsfunktion bereitzustellen, der trotz einfacher Konstruktion eine ausreichende Schwingungsdämpfung und Lebensdauer bereitstellt.

### 3. Zusammenfassung der Erfindung

Die obige Aufgabe wird durch einen Befestiger mit Dämpfungsfunktion gemäß dem unabhängigen Patentanspruch 1, durch eine Verbindung zumindest eines ersten und eines zweiten Bauteils mit dem oben genannten Befestiger gemäß dem unabhängigen Patentanspruch 8, durch ein Verbindungsverfahren des zumindest einen ersten Bauteils mit einer rotationsasymmetrischen Öffnung und des zumindest einen zweiten Bauteils mithilfe des oben genannten Befestigers gemäß dem unabhängigen Patentanspruch 11 und durch ein Herstellungsverfahren für den Befestiger gemäß dem unabhängigen Patentanspruch 15 gelöst. Vorteilhafte Ausgestaltungen und Weiterentwicklungen vorliegender Erfindung gehen aus der folgenden Beschreibung, den begleitenden Zeichnungen und den anhängenden Patentansprüchen hervor.

Der erfindungsgemäße Befestiger mit Dämpfungsfunktion, mit dem mindestens ein erstes und ein zweites Bauteil über eine Schraubverbindung verbindbar sind, weist die folgenden Merkmale auf: eine elastisch verformbare Außenhülse mit einer Einschrauböffnung in einem ersten axialen Endbereich und einem Einschraubbereich für eine Schraube in einem zweiten axialen Endbereich, wobei die Außenhülse zumindest im ersten axialen Endbereich eine rotationsasymmetrische Umfangskontur aufweist, mit der ein Formschluss gegen Drehung in einer an die Umfangskontur der Außenhülse angepassten Bauteilöffnung herstellbar ist, und eine rotationsasymmetrische
Stützhülse, die innerhalb der Außenhülse in dem ersten axialen Endbereich formschlüssig gegen Drehung relativ zur Außenhülse angeordnet ist, so dass die Umfangskontur der elastisch verformbaren Außenhülse im ersten axialen Endbereich zumindest bereichsweise formerhaltend gestützt ist, und die formschlüssig mit dem fest im zweiten axialen Endbereich angeordneten Befestigungsabschnitt gegen eine Relativdrehung zwischen dem ersten und dem zweiten axialen Endbereich der Außenhülse verbunden ist.

Vorliegende Erfindung liefert einen schwingungsdämpfenden Befestiger, der mithilfe der Kombination von Formschluss mit den zu verbindenden Bauteilen, radial innerer Stabilisierung und Stütze dieses Formschlusses sowie radial äußerer elastisch dämpfender Materialanordnung eine verlässliche Verbindung bei gleichzeitig effektiver Schwingungsdämpfung realisiert. Dabei wird zusätzliche Elastizität der verformbaren Außenhülse zur Schwingungsdämpfung durch eine formschlussgewährende Außenkontur der Außenhülse ermöglicht. Denn diese Außenkontur der Außenhülse ist an die Form der aufnehmenden Öffnung in zumindest einem der miteinander zu verbindenden Bauteilen angepasst. Während diese formschlussunterstützende und somit rotationsasymmetrische Umfangskontur der Außenhülse einen gegen Drehung stabilisierten Halt der Außenhülse in dem Bauteil gewährleistet, wird diese Konstruktion und Funktion durch eine analog dazu geformte Stützhülse innerhalb der Außenhülse gefördert. Aufgrund der axialen Anordnung und der bevorzugt aneinander angepassten bzw. analogen Formgestaltung von Außenhülse und Stützhülse wirkt die Stützhülse bereits ohne Faltung der Außenhülse formerhaltend auf die Außenhülse ein. Trotz des elastischen Materials der Außenhülse zur Schwingungsdämpfung soll der Befestiger auch eine ausreichende Torsionsstabilität aufweisen, um bei seiner Installation nicht beschädigt oder zerstört zu werden. Diese wäre möglich, wenn beim Einschrauben der Befestigungsschraube in den Befestigungsabschnitt die Außenhülse übermäßig in sich verdreht werden würde. Denn ein derartiges Verdrehen schädigt die Außenhülse und/oder führt zu einer reduzierten Elastizität des Materials der Außenhülse. Daher ist ein Formschluss gegen Drehung zwischen dem Befestigungsabschnitt und der Stützhülse vorgesehen. Da die Stützhülse im ersten axialen Endbereich der Außenhülse gegen Drehung gehalten wird, verhindert der Formschluss zwischen Stützhülse und Befestigungsabschnitt ein Mitdrehen des Befestigungsabschnitts beim Einschrauben der Befestigungsschraube in den Befestigungsabschnitt. Dadurch wird das Schraubmoment der Befestigungsschraube, das sich durch Reibschluss auf den Befestigungsabschnitt überträgt, über die Stützhülse und den ersten axialen Endbereich der Außenhülse in das zweite Bauteil eingeleitet. Alternativ oder kombiniert damit ist es ebenfalls bevorzugt, das Schraubmoment über die Stützhülse und einen bevorzugten Befestigungsflansch auf das zweite Bauteil zu übertragen. Aufgrund dieser inneren Konstruktion des Befestigers wird die Außenhülse zum Erhalt ihrer dämpfenden Materialeigenschaften gegen Torsion geschützt. Dabei ist es bevorzugt, ein Verdrehen der Außenhülse um ihre Längsachse auf einen Drehwinkel von maximal 180 °, vorzugsweise maximal 90 ° zu begrenzen und weiter bevorzugt vollständig zu verhindern. Somit sind der Befestigungsabschnitt, vorzugsweise eine unten näher beschriebene Schraubhülse, und die Stützhülse sowie die Stützhülse und der erste axiale Endbereich der Außenhülse mit Hilfe des zweiten Bauteils drehfest miteinander verbunden. Drehfest bedeutet in diesem Zusammenhang, dass eine Relativdrehung zwischen zwei verbundenen Elementen auf einen maximalen Drehwinkel begrenzt oder vollständig verhindert ist.

Weiterhin bevorzugt ist der Befestigungsabschnitt drehungsfrei, vorzugsweise vollständig drehungsfrei, zumindest mit einem Teilbereich radial innerhalb der Stützhülse angeordnet. Zudem ist der Teilbereich des Befestigungsabschnitts in axialer Richtung der Stützhülse relativ zur Stützhülse versetzbar.

Erfindungsgemäß bevorzugt ist der Befestigungsabschnitt funktionell zweigeteilt aufgebaut. Ein erster funktioneller Teil nimmt ein Gewinde einer Befestigungsschraube auf, vorzugsweise ein selbstschneidendes oder ein selbstfurchendes Gewinde. Ein zweiter funktioneller Teil ist konstruktiv derart ausgebildet, dass der Befestigungsabschnitt drehfest mit der Stützhülse verbunden ist. Diese drehfeste Verbindung erlaubt gleichzeitig einen axialen Versatz der miteinander verbunden Stützhülse und des Befestigungsabschnitts relativ zueinander. Dies ist bevorzugt mit Hilfe einer teleskopartigen Verbindung zwischen Stützhülse und Befestigungsabschnitt realisierbar. In dieser sind die Teleskopelemente in einer Umfangskontur ungleichmäßig ausgebildet, so dass ein Verdrehen der Teleskopelemente zueinander verhindert ist. Zudem ist es bevorzugt, den Befestigungsabschnitt über Stege in dafür vorgesehene Öffnungen der Stützhülse oder umgekehrt eingreifen zu lassen. Diese bevorzugte Eingriffsverbindung ist drehfest und erlaubt gleichzeitig einen axialen Versatz zwischen Stützhülse und Befestigungsabschnitt.

Gemäß einer bevorzugten Ausführungsform des erfindungsgemäßen Befestigers weist die Außenhülse in dem ersten axialen Endbereich einen Radialkragen und in dem zweiten dem ersten gegenüberliegenden axialen Endbereich eine fest angeordnete Schraubhülse auf, die den Einschraubbereich umfasst, in dem ein Gewinde der Schraube aufnehmbar ist.

Aufgrund der axialen Erstreckung der Außenhülse lässt sich diese in einen ersten axialen Endbereich und in einen zweiten axialen Endbereich unterteilen. Der erste axiale Endbereich grenzt an eine Einschrauböffnung für die Befestigungsschraube an. Im zweiten axialen Endbereich ist vorzugsweise der Einschraubbereich vorgesehen, vorzugsweise ein Mutterabschnitt oder ein Abschnitt zum Einschneiden oder Einfurchen eines Gewindes.

Der Einschraubbereich wird bevorzugt durch eine Schraubhülse realisiert. Die Schraubhülse ist gemäß unterschiedlicher bevorzugter Ausführungsformen integral in der Außenhülse ausgebildet, als ein separates Teil in die Außenhülse eingeklebt, eingepresst oder darin drehfest mit oder ohne Spiel gehalten.

Weiterhin bevorzugt ist in axialer Richtung zwischen dem ersten axialen Endbereich und dem zweiten axialen Endbereich der Außenhülse ein Faltbereich vorgesehen. Sobald eine Schraube in den Befestigungsbereich eingeschraubt wird und sich dadurch der zweite axiale Endbereich in Richtung des ersten axialen Endbereich bewegt, entsteht im Faltbereich eine radial auswärts ragende Faltung. Diese Faltung stützt sich nach vollständiger Befestigung des Befestigers zumindest an dem mindestens einen ersten Bauteil ab. Der genannte Radialkragen stellt dabei vorzugsweise eine stützende und dämpfende Zwischenschicht zwischen den beiden einander gegenüberliegend angeordneten ersten und zweiten Bauteilen dar. Gemäß einer anderen bevorzugten Ausführungsform dient dieser Radialkragen vorzugsweise dem verliersicheren Halt der Stützhülse, wenn der Befestiger noch nicht installiert ist. Die Stützhülse weist zu diesem Zweck vorzugsweise einen Befestigungsflansch auf, der in einer formangepassten Vertiefung des Befestigungsflansches anordenbar und/oder verrastbar ist. Da die Außenkontur der Stützhülse formangepasst an die Innenkontur der Außenhülse und die Außenhülse wiederum formangepasst an die asymmetrische Öffnung im zweiten Bauteil ist, widersteht die Außenhülse über diese konstruktive Verbindung einem Drehmoment aus dem Befestigungsabschnitt. Denn das Drehmoment aus dem Befestigungsabschnitt wird in das Bauteil abgeleitet. Dadurch werden der erste axiale Endbereich und der zweite axiale Endbereich der Außenhülse nicht oder nur vernachlässigbar gegeneinander verdreht ähnlich einer drehfesten Verbindung.

Diese Stabilisierung der Außenhülse wird ebenfalls bevorzugt mit Anordnung des Befestigungsflansches der Stützhülse in der formangepassten Öffnung des Radialkragens erzielt. Während der Installation des Befestigers wird der Befestigungsflansch drehfest im oder am Radialkragen gehalten. Zudem stellt der Radialkragen über seine Anlagefläche am zweiten Bauteil angrenzend zur Bauteilöffnung eine drehfeste reibschlüssige Verbindung zwischen Radialkragen der Außenhülse, Stützhülse und zweitem Bauteil her. Diese Verbindung begrenzt, vorzugsweise verhindert, ebenfalls ein Verdrehen der Stützhülse gegenüber dem Befestigungsabschnitt und dem zweiten axialen Endbereich.

Weiterhin bevorzugt weist der erfindungsgemäße Befestiger in der Schraubhülse einen koaxial zur Außenhülse verlaufenden Schraubkanal auf, der zylindrisch oder in einer Einschraubrichtung konisch verjüngt ausgebildet ist. Dieser Einschraubkanal bildet bevorzugt die konstruktive Basis, damit die einzuschraubende Schraube darin selbstständig ein Gewinde schneiden und/oder furchen kann. Es ist ebenfalls bevorzugt, in diesem Schraubkanal ein passend zur Befestigungsschraube ausgestaltetes Muttergewinde vorzusehen. Um hier ein bestimmtes Einschraubdrehmoment der Befestigungsschraube und auch ein bevorzugtes Lösemoment der Befestigungsschraube nach Herstellen der Verbindung einstellen zu können, sind die Gewinde von Befestigungsschraube und bevorzugtem Mutterelement entsprechend aufeinander abgestimmt.

Gemäß einer weiteren bevorzugten Ausführungsform des erfindungsgemäßen Befestigers weist die Schraubhülse eine in axialer Richtung zumindest zweistufige radiale Außenkontur auf, die einen der Stützhülse abgewandten Befestigungsbereich und einen der Stützhülse zugewandten Teleskopbereich umfasst, wobei der Teleskopbereich eine geringere radiale Ausdehnung als der Befestigungsbereich und ein innerer axialer Kanal der Stützhülse hat. Der bevorzugte Teleskopbereich der Schraubhülse wird während der Faltung der elastisch verformbaren Außenhülse und somit während des Anziehens der Befestigungsschraube in eine verschachtelte Anordnung mit der Außenhülse und der Stützhülse bewegt. Diese verschachtelte Konstruktion gewährleistet neben einer axial kompakten Anordnung auch eine zusätzliche radiale Stabilität, da innere Zwischenräume im Befestiger mithilfe einer Mehrkomponentenabstützung geschlossen und dadurch lastabtragend optimiert werden. In diesem Zusammenhang sind bevorzugt der Befestigungsbereich und der Teleskopbereich der Schraubhülse über die axiale Anlagefläche abgestuft und verbunden.

Gemäß einer weiteren bevorzugten Ausführungsform des erfindungsgemäßen Befestigers ist eine Außenkontur des Teleskopbereichs der Schraubhülse an eine Innenkontur einer radialen Innenwand der Stützhülse formangepasst, so dass die Stützhülse die Schraubhülse gegen Drehung blockiert und die Außenhülse torsionsfrei um eine Längsachse, vorzugsweise um einen Drehwinkel <180 ° torsionsfrei oder nahezu vollständig torsionsfrei, in axialer Richtung komprimierbar ist. Weiterhin bevorzugt ist die Stützhülse kürzer als die Außenhülse ausgebildet.

Zur Realisierung eines Formschlusses zwischen dem erfindungsgemäß bevorzugten Befestiger und einer Öffnung im ersten Bauteil weist die Außenhülse vorzugsweise eine unrunde oder eine elliptische oder eine polygonale, vorzugsweise sechseckige oder eine achteckige, Umfangskontur auf. Zur Unterstützung dieser einen Formschluss erzeugenden Umfangskontur der elastisch verformbaren Außenhülse ist vorzugsweise eine Innenwandkontur der Außenhülse analog zur Umfangskontur ausgebildet, wie oben bereits angesprochen worden ist. Dies gewährleistet die bevorzugt radiale Unterstützung der Außenhülse mithilfe der in ihrem Inneren angeordneten rotationsasymmetrischen Stützhülse. Denn gemäß einer weiteren bevorzugten Ausführungsform vorliegender Erfindung ist die Stützhülse passend zur Innenwandkontur der Außenhülse geformt. Da gemäß weiterhin bevorzugt die Stützhülse an der Innenwand der elastisch verformbaren Außenhülse anliegt, trägt die Stützhülse aufgrund ihrer geringeren Verformbarkeit als die Außenhülse zur Formstabilität der Außenhülse innerhalb einer an die Umfangskontur angepassten Öffnung im ersten Bauteil bei. Somit sind gleichzeitig eine Schwingungsdämpfung durch das elastisch verformbare Material der Außenhülse sowie ein formschlüssiger Halt der Außenhülse innerhalb einer formangepassten Öffnung des ersten Bauteils gewährleistet. In diesem Zusammenhang ist es unterstützend ebenfalls bevorzugt, dass die Stützhülse an einer radialen Außenwand passend zur Innenwandkontur der Außenhülse geformt ist.

Gemäß einer weiteren Ausführungsform des erfindungsgemäßen Befestigers stellt die Stützhülse eine axiale Anlagefläche in Richtung des zweiten axialen Endbereichs am Befestigungsbereich bereit, die eine axiale Verkürzung der Außenhülse und eine damit verbundene Faltung quer zu einer Längsachse der Außenhülse über die Schraubverbindung begrenzt.

Während die Stützhülse formerhaltend auf die Umfangskontur der elastisch verformbaren Außenhülse radial auswärts wirkt, stellt sie gleichzeitig eine axiale Stabilisierungs- und Stützfunktion für den Befestiger bereit. Denn im befestigten Zustand wird die verformbare Außenhülse maximal bis zu der bevorzugten axialen Anlagefläche der Stützhülse komprimiert und dadurch gefaltet. Durch die axiale Unterstützung der Stützhülse wird somit zusätzlich eine übermäßige Flächenpressung der gefalteten Außenhülse, deren mögliche Beschädigung oder eine plastische Verformung der Außenhülse verhindert. Zudem signalisiert ein steigendes Drehmoment bei der Installation des Befestigers dem Werker, dass die Bauteile nun fest miteinander verbunden sind. Dies kann zur automatischen Beendigung des Installationsverfahrens genutzt werden. Vorliegende Erfindung offenbart zudem eine Verbindung zumindest eines ersten und eines zweiten Bauteils mit dem oben beschriebenen Befestiger gemäß seiner unterschiedlichen bevorzugten Ausführungsformen, in der eine Schraubverbindung die Bauteile und den Befestiger zusammenhält. In diesem Zusammenhang ist es bevorzugt, dass das mindestens eine Bauteil eine rotationsasymmetrische Öffnung angepasst an die rotationsasymmetrische Umfangskontur der Außenhülse aufweist, so dass ein Formschluss gegen Drehung zwischen dem mindestens einen Bauteil und der elastisch verformbaren Außenhülse herstellbar ist. Gemäß einer weiteren bevorzugten Ausführungsform der erfindungsgemäßen Verbindung wird das zumindest eine erste Bauteil zwischen dem Radialkragen und einer Faltung der elastisch verformbaren Außenhülse und das zumindest eine zweite Bauteil zwischen dem Radialkragen und einem Kopf einer im Befestiger eingeschraubten Schraube gehalten.

Vorliegende Erfindung umfasst zudem ein Verbindungsverfahren von zumindest einem ersten Bauteil mit einer rotationsasymmetrischen Öffnung und zumindest einem zweiten Bauteil mithilfe des oben beschriebenen Befestigers, wobei das Verbindungsverfahren die folgenden Schritte aufweist: Einsetzen des Befestigers in die Öffnung des zumindest einen ersten Bauteils, so dass der Befestiger formschlüssig gegen Drehung in der Öffnung gehalten ist, Anordnen des zumindest einen zweiten Bauteils mit einer Befestigungsöffnung angrenzend an den Befestiger und Einschrauben einer Schraube in den Befestiger und durch die Befestigungsöffnung und die Öffnung der Bauteile, bis das erste Bauteil zwischen einem Radialkragen und einer Faltung der Außenhülse und das zweite Bauteil zwischen einem Kopf der Schraube und dem Radialkragen der Außenhülse befestigt sind.

Im Rahmen des erfindungsgemäß bevorzugten Verbindungsverfahrens wird zudem beim Einschrauben der Befestigungsschraube die Außenhülse soweit verkürzt, bis sich die Stützhülse an einer axialen Anlagefläche des Einschraubbereichs der Außenhülse abstützt. Diese Abstützung in axialer Richtung unterstützt eine Stabilisierung des Befestigers parallel zur eingeschraubten Befestigungsschraube. In diesem Zusammenhang ist es ebenfalls bevorzugt, dass eine gewindeschneidende oder eine gewindefurchende Schraube in einem Einschraubbereich der Außenhülse eingeschraubt wird. Der in diesem Zusammenhang vorzusehende Einschraubbereich ohne ein eigenes Gewinde zur Direktverschraubung ist mit einem reduzierten Herstellungsaufwand gerade im Hinblick auf das Vorsehen eines Mutterabschnitts verbunden. Gleichzeitig sorgt aber auch die Nutzung einer gewindeschneidenden oder gewindefurchenden Schraube für eine die Verbindung zwischen den beiden Bauteilen unterstützende Klemmwirkung zwischen der Befestigungsschraube und dem Einschraubbereich der Außenhülse.

Das bevorzugte Verbindungsverfahren zeichnet sich weiterhin dadurch aus, dass beim Einschrauben der Befestigungsschraube in einen Befestigungsabschnitt im zweiten axialen Endbereich der Außenhülse der Befestigungsabschnitt formschlüssig gegen Drehung in der Stützhülse gehalten und in axialer Richtung der Stützhülse innerhalb der Stützhülse versetzt wird. Dabei verkürzt sich die Außenhülse vorzugsweise soweit, bis sich die Stützhülse an einer axialen Anlagefläche der Schraubhülse abstützt.

Vorliegende Erfindung offenbart zudem ein Herstellungsverfahren für den oben beschriebenen Befestiger. Dieses Herstellungsverfahren weist die folgenden Schritte auf: Herstellen einer Außenhülse aus elastisch verformbarem Material mit einer rotationsasymmetrischen Umfangskontur mit Hilfe eines Spritzgussverfahrens oder eines additiven Herstellungsverfahrens, Herstellen einer Schraubhülse und Befestigen der Schraubhülse in der Außenhülse, Spritzgießen einer rotationsasymmetrischen Stützhülse formangepasst an die Außenhülse, die aus einem Material geringerer Verformbarkeit als die Außenhülse besteht, mit Hilfe eines Spritzgussverfahrens oder eines additiven Herstellungsverfahrens und Anordnen der Stützhülse in die Außenhülse.

Der Befestiger wird gemäß einer Ausführungsform mittels Spritzgussverfahren hergestellt. Gemäß einer Alternative werden die Außenhülse, die Stützhülse und die Schraubhülse getrennt voneinander spritzgegossen und danach zusammengesetzt. Im weiteren Verfahrensverlauf wird die Schraubhülse im zweiten axialen Endbereich der Außenhülse eingepresst, eingeklebt, eingeschweißt oder formschlüssig mit einem gewissen Spiel befestigt.

Gemäß einer weiteren bevorzugten Herstellungsroute wird an Stelle der oben genannten Spritzgussverfahren ein additives Herstellungsverfahren genutzt. Bei additiven Herstellungsverfahren wird der Werkstoff zur Erzeugung eines Bauteils schichtweise hinzugefügt wird. Mit Hilfe dieser Schichtbauweise sind geometrisch komplexe Strukturen herstellbar, die mit konventionellen Fertigungsverfahren nur aufwendig realisiert werden können. Im Rahmen von Extrusionsverfahren wird ein Kunststofffaden durch eine beheizte Düse aufgeschmolzen und geometrisch definiert abgelegt. Indem punktgenau einzelne Materialstränge Schicht für Schicht positionsgenau abgelegt werden, entsteht das gewünschte Bauteil. Weiterhin sind pulverbasierte Verfahren bevorzugt. Hier wird ein pulverisiertes Ausgangsmaterial in einer dünnen Schicht auf die Arbeitsfläche auftragen und dann punktgenauen aufgeschmolzen. Die punktgenaue Energiezufuhr erfolgt mittels Laser, wobei das Material aufgeschmolzen wird und sich beim Erstarren mit benachbarten Schichten/Strukturen verbindet. Wenn eine Schicht fertig ist, wird wieder eine dünne Schicht frisches Pulver aufgetragen und der Vorgang beginnt von neuem. Das Laser-Verfahren ist für Kunststoffe (Kunststoff Laser-Sintern) in gleicher Weise wie für Metalle (Laser-Strahlschmelzen) anwendbar.

Weiterhin bevorzugt werden zumindest die Außenhülse und die Schraubhülse in einem 2K Spritzgussverfahren hergestellt. Unter dem Begriff Zweikomponentenspritzgießen (2K Spritzguss) werden diejenigen Verfahren zusammengefasst, bei denen zwei verschiedene Kunststofftypen oder Kunststoffmodifikationen über Spritzgießen in einem Prozess miteinander verbunden werden. Mit unterschiedlicher Kunststoffmodifikation ist dabei derselbe Kunststofftyp, allerdings mit abweichenden Füllstoffen, wie beispielsweise Farbstoffe (Mehrfarbenspritzgießen), Verstärkungs- oder Fasermaterial bekannter Kunststoffe, wie bspw. Glasfasern, unterschiedlich große Anteile an Verstärkungsmaterial oder unterschiedliche oder unterschiedliche Anteile von Weichmachern, gemeint. Diese Art von Urformung birgt ein großes Potential bezüglich Kostenoptimierung und Rationalisierung in sich, denn komplexe Teile mit mehreren Funktionsanforderungen (z.B. mehrere Farben, hart/weich usw.) lassen sich in einem Arbeitsschritt und ohne größere Nacharbeit herstellen. Bei diesem Verfahren werden zwei unterschiedliche Kunststoffe zeitlich versetzt in eine Spritzgussform eingespritzt, um ein aus zwei Komponenten bestehendes Teil herzustellen. Es ist ebenfalls möglich, den gleichen Kunststoff zeitlich versetzt in zwei oder mehreren Schüssen in die Spritzgussform einzubringen. Die durch den jeweiligen Schuss erzeugten Komponenten werden in aneinander angrenzender Anordnung in der Spritzgussform gebildet, ohne ineinander zu fließen. Dabei ist es ebenfalls bevorzugt, dass zueinander abgegrenzte Hohlräume der Spritzgussform gleichzeitig oder zeitlich versetzt mit dem gleichen oder unterschiedlichen Kunststoffen gefüllt werden, um die oben genannten Komponenten zu bilden. Dabei sind vorzugsweise die mehreren Komponenten, hier bevorzugt die Stützhülse und die Außenhülse oder die Stützhülse und die Schraubhülse, über eine Mehrzahl von Abrissstegen miteinander verbunden. Abrissstege bezeichnen stegartige Brücken zwischen den Kunststoffteilen, die aufgrund ihres geringen Durchmessers ohne maschinellen Aufwand durchtrennbar sind. Auf dieser Grundlage sind bevorzugt die Stützhülse und die Schraubhülse als Einheit in der Außenhülse installierbar. Erst bei Einsetzen des Befestigers in die Bauteilöffnung oder beim Einschrauben der Schraube in den Befestiger werden die Stege zwischen Stützhülse und Schraubhülse gebrochen, so dass Stützhülse und Schraubhülse voneinander getrennt werden und als separate Komponenten im Befestiger vorliegen.

Gemäß einer weiteren bevorzugten Herstellungsalternative werden die Stützhülse und die Schraubhülse als lösbarer Verbund hergestellt, wobei der Verbund über Reibschluss zwischen der Stützhülse und der Schraubhülse oder über zerstörbare Verbindungsstege realisiert ist.

### 4. Kurze Beschreibung der begleitenden Zeichnungen

Die bevorzugten Ausführungsformen vorliegender Erfindung werden unter Bezugnahme auf die begleitende Zeichnung näher erläutert. Es zeigen:
- Fig. 1: eine perspektivische Seitenansicht einer Explosionsdarstellung einer bevorzugten Ausführungsform des Befestigers in Kombination mit einem ersten und einem zweiten Bauteil,
- Fig. 2: eine Darstellung einer bevorzugten Ausführungsform des erfindungsgemäßen Befestigers in Kombination mit dem ersten und dem zweiten Bauteil in einem Axialschnitt entlang einer Mittelachse des Befestigers mit Befestigungsschraube im nichtangezogenen Zustand,
- Fig. 3: der bevorzugte Befestiger gemäß Figur 2 mit der Befestigungsschraube im angezogenen Zustand,
- Fig. 4: eine bevorzugte Ausführungsform eines axialen Längsschnitts durch die elastisch verformbare Außenhülse mit einer bevorzugten Schraubhülse,
- Fig. 5: eine perspektivische Draufsicht auf eine bevorzugte Ausführungsform der elastisch verformbaren Außenhülse und in den ersten axialen Endbereich,
- Fig. 6: eine Ansicht in Einschraubrichtung einer bevorzugten Ausführungsform der elastisch verformbaren Außenhülse mit Schraubhülse,
- Fig. 7: eine perspektivische Darstellung einer bevorzugten Ausführungsform der rotationsasymmetrischen Stützhülse,
- Fig. 8: eine weitere perspektivische Ansicht einer bevorzugten Ausfiihrungsform der rotationsasymmetrischen Stützhülse gemäß Figur 7,
- Fig. 9: eine Seitenansicht des Befestigers gemäß Figur 1 ohne Bauteile und Befestigungsschraube,
- Fig. 10: eine Schnittdarstellung durch den Befestiger entlang der Linie A-A der Figur 9,
- Fig. 11: ein Flussdiagramm einer bevorzugten Ausführungsform eines Verbindungsverfahrens und
- Fig. 12: ein Flussdiagramm einer bevorzugten Ausfuhrungsform eines Herstellungsverfahrens des erfindungsgemäß bevorzugten Befestigers.

### 5. Detaillierte Beschreibung der bevorzugten Ausführungsformen

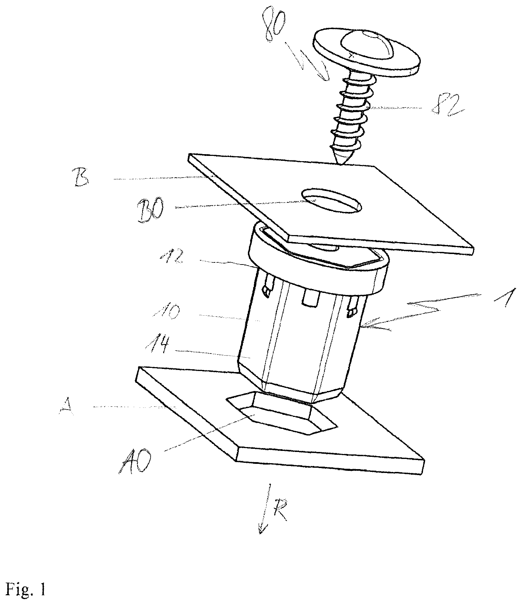

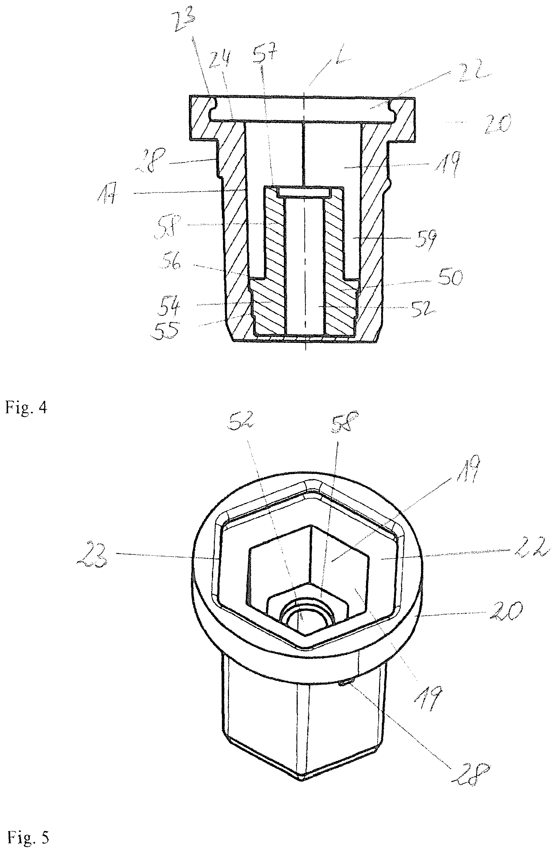

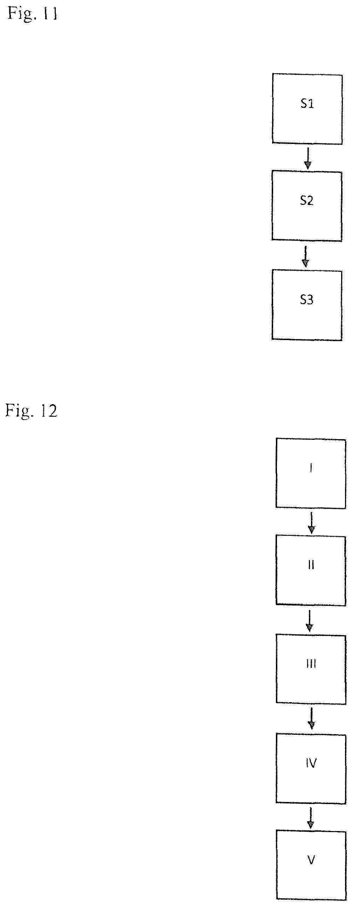

Unter Bezugnahme auf die Figuren 1 bis 12 werden im Folgenden bevorzugte Ausführungsformen des Befestigers 1 beschrieben.

Der Befestiger 1 stellt eine Verbindung zwischen zumindest einem ersten Bauteil A und zumindest einem zweiten Bauteil B her. Aufgrund der Materialbeschaffenheit einer elastisch verformbaren Außenhülse 10 des Befestigers 1, die in einer Öffnung AO des Bauteils A angeordnet ist, sind die beiden Bauteile A und B schwingungsentkoppelt bzw. geräuschentkoppelt miteinander verbunden. Um entsprechend in einem Anwendungsbereich des Befestigers 1 einen breiten Frequenzbereich oder einen ausgewählten Frequenzbereich von Schwingungen dämpfen zu können, ist die Elastizität des Materials der Außenhülse 10 gezielt auswählbar bzw. bei der Herstellung des Befestigers 1 gezielt wählbar. Die gesamte Konstruktion des Befestigers 1 erlaubt in diesem Zusammenhang, dass weiche elastische Werkstoffe in gleicher Weise eingesetzt werden können wie härtere Werkstoffe. Erfindungsgemäß bevorzugt besteht die Außenhülse 10 aus elastisch weicherem Material als die innerhalb der Außenhülse 10 des Befestigers 1 angeordneten Komponenten, wie beispielsweise eine Stützhülse 30 oder eine Schraubhülse 50.

Vorzugsweise besteht die in einem Spritzgießverfahren hergestellte Außenhülse 10 aus Kunststoff (Schritt I des Herstellungsverfahrens). Der Kunststoff ist vorzugsweise ein Elastomer auf Polyesterbasis, insbesondere Polybutylenterephthalat (PBT) oder Polyethylenterephthalat (PET). Diese Materialien sind zwar elastisch verformbar, haben jedoch eine relativ hohe Shore-Härte (im Shore D-Bereich) sowie eine ausgezeichnete Wärmeformbeständigkeit (150°C und mehr). Darüber hinaus verfügen sie über eine gute Chemikalienbeständigkeit, insbesondere Dieselölbeständigkeit. In Frage kommen auch vernetzte Elastomere, wie Gummi/Kautschuk. Zudem wird die Außenhülse 10 bevorzugt aus thermoplastischen Elastomeren (TPE), aus thermoplastischen Polyolefine Vulkanisaten (TPV), Mischungen von beiden oder aus Silikonen mittels Spritzguss hergestellt.

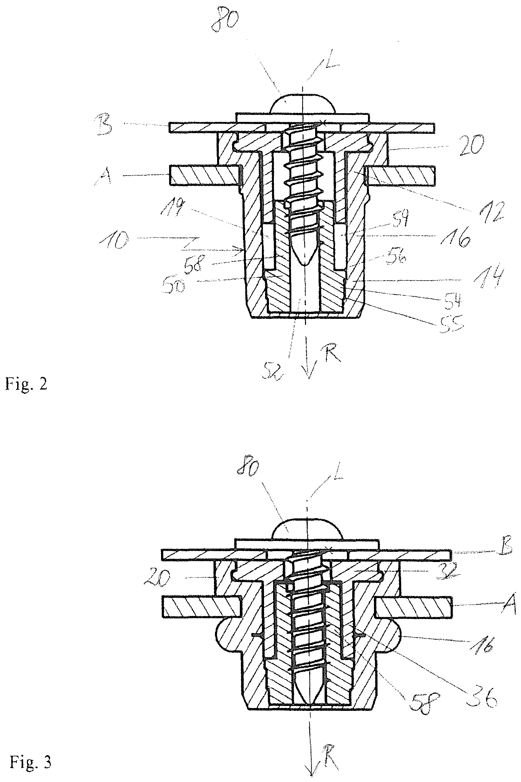

Die Außenhülse 10 hat bevorzugt einen sich axial erstreckenden Abschnitt mit einem ersten 12 und einem zweiten axialen Endbereich 14. Zwischen dem ersten 12 und dem zweiten Endbereich 14 ist ein Faltbereich 16 angeordnet, wie gerade im Vergleich der Figuren 2 und 3 deutlich wird.

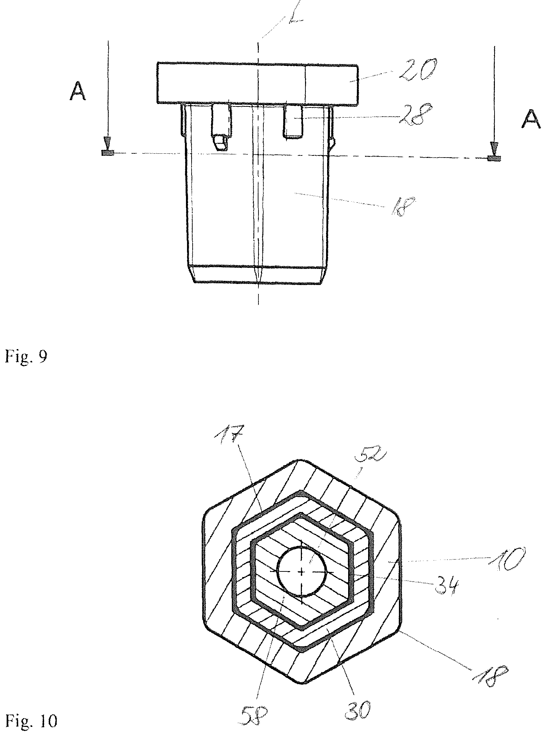

Der sich axial erstreckende Abschnitt 12, 14, 16 weist zumindest in einem axialen Teilbereich eine rotationsasymmetrische Umfangskontur 18 auf, wie man anhand des Schnittbilds in Figur 10 erkennen kann. Figur 10 zeigt einen Schnitt entlang der Linie A-A durch den Befestiger 1 der Figur 9. Vorzugsweise ist dieser Teilbereich im ersten axialen Endbereich 12 angeordnet. Dadurch ist gewährleistet, dass sich der Teilbereich in die Öffnung AO des Bauteils A erstreckt, um einen Formschluss gegen Drehung herzustellen. Es ist ebenfalls bevorzugt, dass sich die rotationsasymmetrische Umfangskontur 18 über alle oder eine Auswahl sich axial erstreckende Abschnitt 12, 14, 16 erstreckt.

Die rotationsasymmetrische Umfangskontur 18 ist gemäß unterschiedlicher bevorzugter Ausführungsformen unterschiedlich geformt. Ihr Ziel besteht darin, eine formschlüssige Verbindung mit der Öffnung AO herzustellen, durch die eine Drehung des Befestigers 1 in der Öffnung AO verhindert ist. Um dieses Ziel zu erreichen, ist die Öffnung AO im ersten Bauteil A analog zur Umfangskontur 18 geformt. Bevorzugte rotationsasymmetrische Formgestaltungen für die Umfangskontur 18 und die Öffnung AO sind elliptisch, oval, unrund, zitronenförmig gleich einem Längsschnitt durch eine Zitrone oder mehreckig, wie beispielsweise dreieckig, viereckig, sechseckig, achteckig oder allgemein polygonal.

Im ersten axialen Endbereich 12 umfasst die Außenhülse 10 bevorzugt einen Radialkragen 20. Dieser schließt die Außenhülse 10 am ersten Ende ab, sodass nach Einsetzen des Befestigers 1 in der Öffnung AO des ersten Bauteils A der Radialkragen 20 auf dem ersten Bauteil A aufliegt. Zu diesem Zweck erstreckt sich der Radialkragen 20 in radialer Richtung über den Rand der Öffnung AO hinaus.

Des Weiteren bevorzugt besitzt der Radialkragen 20 eine bestimmte Dicke in axialer Richtung. Über diese Dicke sind im befestigten Zustand die Bauteile A und B voneinander beabstandet, um eine Schwingungsdämpfung im Rahmen der gegenseitigen Abstützung zu erzielen.

Weiterhin bevorzugt weist der Radialkragen 20 eine radial innere runde Aussparung oder Freimachung 22 auf, die koaxial zu einer Längsachse L des Befestigers 1 und der Außenhülse 10 angeordnet ist. Eine zentrale Durchgangsöffnung 19 der Außenhülse 10 ist kleiner in ihrem Durchmesser als die Aussparung 22. Daher ist die Aussparung 22 in Richtung des zweiten Endbereichs 14 durch eine axiale Anlagefläche 24 begrenzt. In entgegengesetzter Richtung, also axial abgewandt vom zweiten Endbereich 14, ist die Aussparung 20 durch eine radiale einwärtsragende Auskragung 23 verjüngt. Diese Auskragung 23, die geschlossen umlaufend oder durchbrochen am Rand der Aussparung 22 ausgebildet sein kann, bildet einen axialen, vorzugsweise flexiblen, Hinterschnitt für einen bevorzugten Befestigungsflansch 32 einer rotationsasymmetrischen Stützhülse 30 (siehe unten).

Eine radiale Außenwand 26 der Außenhülse 10 umfasst bevorzugt unterhalb des Radialkragens 20 radiale Vorsprünge 28, die umfänglich verteilt angeordnet sind. Diese Vorsprünge 28 sind axial durch Rastnasen 29 begrenzt. Die Rastnasen 29 unterstützen den Halt des ersten Bauteils A unterhalb und bevorzugt in Anlage am Radialkragen 20.

Die Durchgangsöffnung 19 der Außenhülse 10 verläuft koaxial zur Längsachse L des Befestigers 1 und ist durch eine radiale Innenwand 17 begrenzt. Vorzugsweise ist eine Kontur der Innenwand 17 gesehen im Querschnitt des Befestigers 1 (siehe Figur 10) analog zur Umfangskontur 18 ausgebildet.

Im zweiten Endbereich 14 ist eine bevorzugte Schraubhülse 50 angeordnet. Die Schraubhülse 50 wird mittels Spritzguss als Einzelteil oder im 2K Spritzguss in Kombination mit der Stützhülse 30 hergestellt. Es ist ebenfalls bevorzugt, die Schraubhülse 50 mit Hilfe von additiven Verfahren aus Kunststoff herzustellen. Die Schraubhülse 50 wird vorzugsweise im zweiten axialen Endbereich 14 der Außenhülse 10 eingeklebt, eingepresst, eingeschweißt, eingespritzt oder mit einem gewissen Spiel eingeschnappt.

Diese Schraubhülse 50 stellt einen Befestigungsabschnitt als koaxial zur Längsachse L verlaufenden Schraubkanal 52 bereit, in dem die Befestigungsschraube 80 zur Herstellung der Verbindung zwischen dem ersten A und dem zweiten Bauteil B über den Befestiger 1) eingeschraubt wird. Erfindungsgemäß bevorzugt verläuft der Schraubkanal 52 zylindrisch oder konisch sich in Einschraubrichtung R der Befestigungsschraube 80 verjüngend. Da die Befestigungsschraube 80 bevorzugt mit einem selbstschneidenden und/oder selbstfurchenden Gewinde 82 ausgestattet ist, schneidet sich das selbstschneidende oder selbstfurchende Gewinde 82 in die Innenwand des Schraubkanals 52 ein. Derartige Gewinde sind in DE 10 2004 021 484 A1 und DE 10 2016 101 910 beschrieben, die hiermit in Bezug auf die Definition der Gewindegeometrie durch Bezugnahme aufgenommen sind. Es ist ebenfalls denkbar, den Schraubkanal 52 mit einem Innengewinde passend zur Befestigungsschraube 80 auszustatten.

Die Schraubhülse 50 wird gemäß oben genannter Ausführungsformen vorliegender Erfindung durch Spritzgießen hergestellt (siehe oben). Beim 2K-Spritzgießen (Zwei-Komponenten-Spritzgießen) wird in nur einer Spritzgussform mit einem ersten Kunststoffschuss die Außenhülse 10 spritzgegossen (Schritt I). Nachfolgend wird durch einen zweiten Kunststoffschuss in derselben Spritzgussform die Schraubhülse 50 spritzgegossen (Schritt II), sodass diese fest im zweiten Endbereich 14 der Außenhülse 10 angeordnet ist (Schritt III). Es ist ebenfalls bevorzugt, diese Herstellungsschritte in ihrer Reihenfolge zu tauschen. Gemäß einer anderen bevorzugten Ausführungsform ist die Schraubhülse 50 ein vorgefertigter Einsatz, der in dem zweiten Endbereich 14 der Außenhülse 10 eingeformt, eingepresst oder eingeklebt wird (Schritt III). Zudem bevorzugt werden die Außenhülse 10 und die Schraubhülse 50 getrennt voneinander spritzgegossen (I, II) und danach aneinander befestigt.

Zur Befestigung weist die Schraubhülse 50 bevorzugt einen Befestigungsbereich 54 mit einer radial äußeren Befestigungswand 55 auf. Die Befestigungswand 55 verläuft bevorzugt konisch in Einschraubrichtung R zu und/oder ist an eines der oben genannten Befestigungsverfahren angepasst.

Der Befestigungsbereich 54 bildet bevorzugt eine axiale Anlagefläche 56. Diese dient der Anlage und Abstützung der Stützhülse 30 in der hergestellten Verbindung (siehe unten und Figur 3).

Erfindungsgemäß bevorzugt schließt sich an die Anlagefläche 56 ein Teleskopbereich 58 an, der in seinem Inneren einen Teil des Schraubkanals 52 bildet. Eine radiale Außenseite des Teleskopbereich 58 ist beabstandet zur Innenwand 17 der Außenhülse 10, sodass dadurch ein bevorzugter Aufnahmespalt 59 entsteht. Der Aufnahmespalt 59 nimmt beim Verbinden der beiden Bauteile A, B zumindest einen Teil der Stützhülse 30 auf, um den Befestiger 1 zu stabilisieren.

Vorzugsweise ist die Länge des Teleskopbereichs 58 beginnend an der Anlagefläche 56 bis zu seiner Stirnfläche 57 an eine Länge der Stützhülse 30 angepasst. Dabei wird die Länge der Stützhülse 30 nur in ihrem Hülsenbereich unter Ausschluss des Befestigungsflansches 32 gemessen. Bevorzugt ist die Länge des Teleskopbereichs 58 gleich der Länge der Stützhülse 30, sodass sich die Stützhülse 30 in der hergestellten Verbindung an der Anlagefläche 56 und die Stirnseite 57 des Teleskopbereichs 58 am Befestigungsflansch 32 abstützen. Es ist ebenfalls bevorzugt, andere Längen für die Stützhülse 30 und den Teleskopbereich 58 zu wählen, solange die bevorzugte drehfeste Verbindung zwischen Schraubhülse 50 und Stützhülse 30 gewährleistet ist.

Um innerhalb der Verbindung eine ausreichende Stabilität des Befestigers 1 zu gewährleisten, ist die Querschnittskontur der Stützhülse 30 und des Teleskopbereichs 58 analog zur Umfangskontur 18 der Außenhülse 10 geformt, wie die Figur 10 zeigt. Es ist ebenfalls bevorzugt, die aneinander angrenzen Konturen des Teleskopbereichs 58 und der Stützhülse 30 sowie der Stützhülse 30 und der Außenhülse 10 anders zu gestalten als die Umfangskontur 18. Hier sind Formen von Prismen, unrunde Formgebungen sowie andere nicht rotationssymmetrische Ausgestaltungen möglich. Es ist ebenfalls bevorzugt, diese drehfest koppelnden Gestaltungen auf einen axialen Teilbereich der jeweiligen Komponente zu beschränken, solange dadurch die gewünschte Funktion realisiert wird.

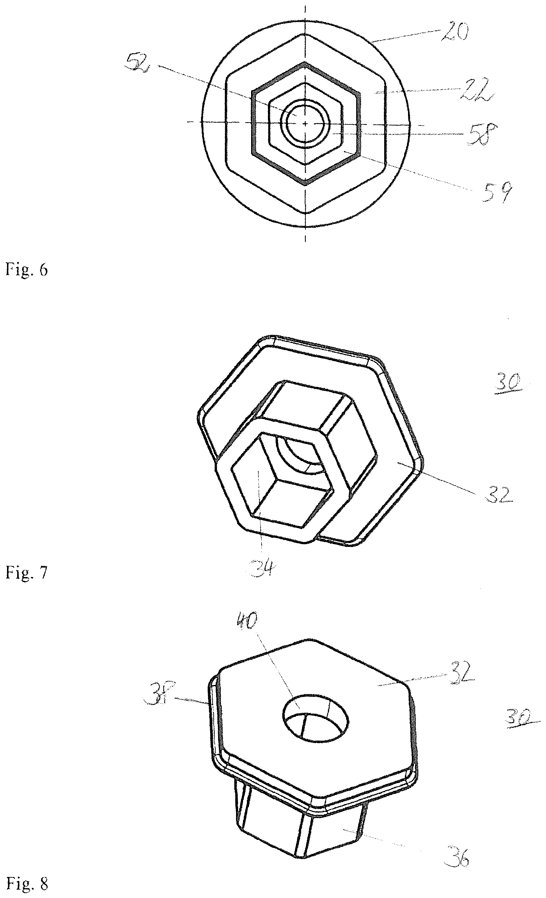

Die Stützhülse 30, die gemäß einer bevorzugten Ausführungsform vorliegender Erfindung ebenfalls mittels Spritzgießen hergestellt wird (Schritt IV), ist im größeren Detail in den Figuren 7 und 8 dargestellt. Der Befestigungsflansch 32 hat einen radialen Vorsprung 38, um hinter der Auskragung 23 des Radialkragens 20 besser gehalten zu werden. Zudem weist der Befestigungsflansch 32 eine Öffnung 40 für die Befestigungsschraube 80 auf, die koaxial zur Längsachse L angeordnet ist. Vorzugsweise wird der Befestigungsflansch 32 in die Aussparung 22 des Radialkragens 20 eingeschnappt, um den Befestiger 1 vorzumontieren. Um auch hier eine bevorzugt drehfeste Anordnung des Befestigungsflansches 32 im Radialkragen 20 zu ermöglich, besitzt der Befestigungsflansch 32 ebenfalls eine rotationsasymmetrische Form. Schraubt man zudem bevorzugt die Befestigungsschraube 80 leicht in den Schraubkanal 52 ein, liegt der Befestiger 1 in einer transportsicheren, vormontierten Einheit vor.

Bevorzugt besteht die Stützhülse 30 aus einem faserverstärkten Kunststoff. Gemäß einer weiteren Ausführungsform besteht die Stützhülse 30 aus einem Material mit einer Bruchspannung von mindestens 100 MPa und einem Elastizitätsmodul von mindestens 6000 MPa. Vorzugsweise wird daher unter anderem ein PA66-GF (Polyamid 66 mit Glasfaserverstärkung) verwendet.

Das Kunststoffmaterial der Schraubhülse 50 hat einen bevorzugten Elastizitätsmodul im Bereich von 1000 bis 2000 MPa. Ein passendes Material ist beispielsweise Polypropylen (PP). Die Außenhülse 10 besteht vorzugsweise aus einem thermoplastischen Polyolefine Vulkanisat (TPV) mit einer bevorzugten Härte von 70 bis 80 Shore A. TPV ist ein Mix aus einem polyolefinbasierten Kunststoff (vorzugsweise PP) und einem Elastomer, wie EPDM. Im Gegensatz zu TPO ist bei TPV das Elastomer vernetzt oder vulkanisiert. Durch die Vulkanisation von Elastomeren in TPV kommt TPV bezogen auf die mechanischen Eigenschaften dem traditionellen Gummi am nächsten. Dies wird vor allem in den sehr guten Kompressionseigenschaften ausgedrückt. Dazu ist TPV temperaturbeständig und eignet sich dadurch für statische und (Semi-) statische Dichtungen.

Um das Bauteil B am Bauteil A zu befestigen, wird zunächst der Befestiger 1 mit Schraubhülse 50 und vormontierter Stützhülse 30 in der Öffnung AO eingesetzt, bevorzugt formschlüssig gegen Drehung gehalten (S1). In diesem Zusammenhang ist es ebenfalls bevorzugt, dass Stützhülse 30 und Schraubhülse 50 über Verbindungsstege oder Reibschluss aus den Spritzgussverfahren miteinander verbunden sind. Nachdem das Bauteil B auf dem Radialkragen 20 angeordnet worden ist (S2), wird die Befestigungsschraube 80 durch die Öffnung 40 in den Schraubkanal 52 geschraubt (S3). Die Befestigungsschraube 80 kommt beim Einschrauben in den Schraubkanal 52 am Bauteil B zur Anlage und zieht nachfolgend die Schraubhülse 50 in Richtung Stützhülse 30. Nachdem oder während die oben genannten Verbindungsstege zerstört oder ein Reibschluss zwischen Stützhülse 30 und Schraubhülse 50 überwunden werden, werden die Stützhülse 30 und der Teleskopbereich 58 teleskopartig ineinander geschoben. Bereits durch die mit der Herstellung des Befestigers 1 erzeugte drehfeste Verbindung zwischen Stützhülse 30 und Teleskopbereich 58 der Schraubhülse 50 wird gewährleistet, dass die Außenhülse 10 vollständig oder zumindest in einem Drehwinkelbereich <180 °, weiter bevorzugt <90 °, gegen Verdrehen um die Längsachse geschützt ist. Um dem Einschraubdrehmoment der Befestigungsschraube 80 widerstehen zu können, stützt sich der Befestiger 1 formschlüssig über die Öffnung OA am Bauteil A und/oder reibschlüssig und formschlüssig über die Anordnung des Befestigungsflansches 32 im Radialkragen 20 und die Abstützung am Bauteil A ab. Es ist weiter bevorzugt, dass sich die Stützhülse 30 an der Anlagefläche 56 und der Teleskopbereich 58 am Befestigungsflansch 32 abstützen. Während dieser teleskopartigen Bewegung bildet sich an der Außenseite der Außenhülse 10 die Faltung 16 aus. In der hergestellten Verbindung ist Bauteil A zwischen der Faltung 16 und dem Radialkragen 20 geklemmt, während Bauteil B zwischen dem Schraubenkopf und dem Radialkragen 20 geklemmt ist.

### Bezugszeichenliste

- A: erstes Bauteil
- B: zweites Bauteil
- R: Einschraubrichtung
- AO, BO: Bauteilöffnung
- L: Längsachse
- 1: Befestiger
- 10: Außenhülse
- 12: Erster Endbereich
- 14: zweiter Endbereich
- 16: Faltbereich
- 17: Innenwand
- 18: Umfangskontur
- 19: Durchgangsöffnung
- 20: Radialkragen
- 22: Aussparung
- 23: Auskragung
- 24: Anlagefläche
- 26: Außenwand
- 28: Vorsprünge
- 30: Stützhülse
- 32: Befestigungsflansch
- 34: radiale Innenwand
- 36: radiale Außenwand
- 38: Vorsprung
- 40: Öffnung
- 50: Schraubhülse
- 52: Schraubkanal
- 54: Befestigungsbereich
- 55: Befestigungswand
- 56: Anlagefläche
- 58: Teleskopbereich
- 59: Aufnahmespalt
- 80: Befestigungsschraube
- 82: Gewinde

## Patentansprüche

1. Befestiger (1) mit Dämpfungsfunktion, mit dem mindestens ein erstes und ein zweites Bauteil über eine Schraubverbindung verbindbar sind, der die folgenden Merkmale aufweist:
a. eine elastisch verformbare Außenhülse (10) mit einer Einschrauböffnung in einem ersten axialen Endbereich (12) und einem Befestigungsabschnitt für eine Schraube in einem zweiten axialen Endbereich (14) und
b. eine Stützhülse (30), die innerhalb der Außenhülse (10) in dem ersten axialen Endbereich (12) formschlüssig gegen Drehung relativ zur Außenhülse angeordnet ist, **dadurch gekennzeichnet, dass**
c. die Außenhülse (10) zumindest im ersten axialen Endbereich (12) eine rotationsasymmetrische Umfangskontur (18) aufweist, mit der ein Formschluss gegen Drehung in einer an die Umfangskontur (18) der Außenhülse (10) angepassten Bauteilöffnung (AO) herstellbar ist, und
d. die Stützhülse (30) rotationsasymmetrisch ist und innerhalb der Außenhülse (10) in dem ersten axialen Endbereich (12) formschlüssig gegen Drehung relativ zur Außenhülse angeordnet ist, so dass die Umfangskontur (18) der elastisch verformbaren Außenhülse (10) im ersten axialen Endbereich (12) zumindest bereichsweise formerhaltend gestützt ist, und
e. die Stützhülse (30) formschlüssig mit dem fest im zweiten axialen Endbereich (14) angeordneten Befestigungsabschnitt gegen eine Relativdrehung zwischen dem ersten (12) und dem zweiten axialen Endbereich (14) der Außenhülse (10) verbunden ist.

2. Befestiger (1) gemäß Patentanspruch 1, dessen Befestigungsabschnitt drehungsfrei, vorzugsweise vollständig drehungsfrei, zumindest mit einem Teilbereich radial innerhalb der Stützhülse (30) angeordnet und in axialer Richtung der Stützhülse (30) relativ zur Stützhülse (30) versetzbar ist.

3. Befestiger (1) gemäß Patentanspruch 1 oder 2, dessen Außenhülse (10) in dem ersten axialen Endbereich (12) einen Radialkragen (20) und in dem zweiten dem ersten (12) gegenüberliegenden axialen Endbereich (14) eine fest angeordnete Schraubhülse (50) aufweist, die den Befestigungsabschnitt umfasst, in dem ein Gewinde der Schraube (80) aufnehmbar ist.

4. Befestiger (1) gemäß Patentanspruch 3, dessen Schraubhülse (50) eine in axialer Richtung zumindest zweistufige radiale Außenkontur aufweist, die einen der Stützhülse (30) abgewandten Befestigungsbereich (54) und einen der Stützhülse (30) zugewandten Teleskopbereich (58) umfasst, wobei der Teleskopbereich (58) eine geringere radiale Ausdehnung als der Befestigungsbereich und ein innerer axialer Kanal der Stützhülse (30) hat.

5. Befestiger (1) gemäß Patentanspruch 4, in dem der Befestigungsbereich (54) und der Teleskopbereich (58) der Schraubhülse (50), vorzugsweise über eine axiale Anlagefläche (56) abgestuft, miteinander verbunden sind.

6. Befestiger (1) gemäß Patentanspruch 4 oder 5, in dem eine Außenkontur des Teleskopbereichs (58) an eine Innenkontur einer radialen Innenwand der Stützhülse (30) formangepasst ist, so dass die Stützhülse (30) die Schraubhülse (50) gegen Drehung blockiert und die Außenhülse (10) torsionsfrei um eine Längsachse, vorzugsweise um einen Drehwinkel <180 ° torsionsfrei oder nahezu vollständig torsionsfrei, in axialer Richtung komprimierbar ist.

7. Befestiger (1) gemäß einem der vorhergehenden Patentansprüche, in dem die Stützhülse (30) eine axiale Anlagefläche (56) in Richtung des zweiten axialen Endbereichs (14) am Befestigungsbereich bereitstellt, die eine axiale Verkürzung der Außenhülse (10) und eine damit verbundene Faltung (16) quer zu einer Längsachse (L) der Außenhülse (10) über die Schraubverbindung begrenzt.

8. Verbindung zumindest eines ersten (A) und eines zweiten Bauteils (B) mit einem Befestiger (1) gemäß einem der Patentansprüche 1 bis 7, in der eine Schraubverbindung die Bauteile (A, B) und den Befestiger (1) zusammenhält.

9. Verbindung gemäß Patentanspruch 8, in der das mindestens eine Bauteil (A) eine rotationsasymmetrische Öffnung angepasst an die rotationsasymmetrische Umfangskontur der Außenhülse (10) aufweist, in der die Außenhülse (10) formschlüssig gegen Drehung angeordnet ist.

10. Verbindung gemäß Patentanspruch 8 oder 9, in der das zumindest eine erste Bauteil (A) zwischen einem Radialkragen (20) und einer Faltung (16) der elastisch verformbaren Außenhülse (10) und das zumindest eine zweite Bauteil (B) zwischen dem Radialkragen (20) und einem Kopf einer im Befestiger (1) eingeschraubten Schraube (80) gehalten sind.

11. Verbindungsverfahren von zumindest einem ersten Bauteil (A) mit einer rotationsasymmetrischen Öffnung und zumindest einem zweiten Bauteil (B) mit einem Befestiger (1) gemäß einem der Patentansprüche 1 bis 7, **gekennzeichnet durch** die folgenden Schritte:
i. Einsetzen (S1) des Befestigers (1) in die Öffnung des zumindest einen ersten Bauteils (A), so dass der Befestiger formschlüssig gegen Drehung in der Öffnung gehalten ist,
ii. Anordnen (S2) des zumindest einen zweiten Bauteils (B) mit einer Befestigungsöffnung angrenzend an den Befestiger (1) und
iii. Einschrauben (S3) einer Schraube (80) in den Befestiger (1) und durch die Befestigungsöffnung und die Öffnung der Bauteile (A, B), bis das erste Bauteil (A) zwischen einem Radialkragen (20) und einer Faltung (16) der Außenhülse (10) und das zweite Bauteil (B) zwischen einem Kopf der Schraube (80) und dem Radialkragen (20) der Außenhülse (10) befestigt sind.

12. Verbindungsverfahren gemäß Patentanspruch 11, wobei beim Einschrauben (S3) der Schraube (80) in einen Befestigungsabschnitt im zweiten axialen Endbereich (14) der Außenhülse (10) der Befestigungsabschnitt formschlüssig gegen Drehung in der Stützhülse (30) gehalten und in axialer Richtung der Stützhülse (30) innerhalb der Stützhülse (30) versetzt wird.

13. Verbindungsverfahren gemäß Patentanspruch 11 oder 12, wobei beim Einschrauben (S3) die Außenhülse (10) soweit verkürzt wird, bis sich die Stützhülse (30) an einer axialen Anlagefläche der Schraubhülse (50) abstützt.

14. Verbindungsverfahren gemäß Patentanspruch 11, 12 oder 13, bei dem eine gewindeschneidende oder gewindefurchende Schraube (80) in einen Befestigungsabschnitt der Außenhülse eingeschraubt wird.

15. Herstellungsverfahren für einen Befestiger (1) gemäß einem der Patentansprüche 1 bis 7, **gekennzeichnet durch** die folgenden Schritte:
i. Herstellen (I) einer Außenhülse (10) aus elastisch verformbarem Material mit einer rotationsasymmetrischen Umfangskontur (18) mit Hilfe eines Spritzgussverfahrens oder eines additiven Herstellungsverfahrens,
ii. Herstellen (II) einer Schraubhülse (50) mittels Spritzguss oder einem additiven Verfahren und Befestigen (III) der Schraubhülse (50) in der Außenhülse (10),
iii. Herstellen (VI) einer rotationsasymmetrischen Stützhülse (30) formangepasst an die Außenhülse (10), die aus einem Material geringerer Verformbarkeit als die Außenhülse (10) besteht, mit Hilfe eines Spritzgussverfahrens oder eines additiven Herstellungsverfahrens und
iv. Anordnen (V) der Stützhülse (30) in der Außenhülse (10).

16. Herstellungsverfahren gemäß Anspruch 15, in dem zumindest die Außenhülse und die Schraubhülse in einem 2K Spritzgussverfahren hergestellt werden.

17. Herstellungsverfahren gemäß Anspruch 15 oder 16, in dem die Stützhülse und die Schraubhülse als lösbarer Verbund hergestellt wird, wobei der Verbund über Reibschluss zwischen der Stützhülse und der Schraubhülse oder über zerstörbare Verbindungsstege realisiert ist.

## Claims

1. A fastener (1) having a damping function, with which at least a first and a second component are connectable via a screw connection, comprising the following features:
a. an elastically deformable outer sleeve (10) having a screw-in opening in a first axial end portion (12) and a fastening section for a screw in a second axial end portion (14) and
b. a support sleeve (30), which is positive-lockingly arranged against rotation relative to the outer sleeve within the outer sleeve (10) in the first axial end portion, **characterized in that**
c. the outer sleeve (10) comprises, at least in the first axial end portion (12), a rotationally asymmetrical circumferential contour (18) with which a positive locking against rotation is establishable in a component opening (AO) adapted to the circumferential contour (18) of the outer sleeve (10), and
d. the support sleeve (30) is rotationally asymmetrical and positive-lockingly arranged against rotation relative to the outer sleeve within the outer sleeve (10) in the first axial end portion (12) so that the circumferential contour (18) of the elastically deformable outer sleeve (10) is supported in the first axial end portion (12) at least in certain areas in a form-maintaining manner, and
e. the support sleeve (30) is positive-lockingly connected to the fastening section arranged firmly in the second axial end portion (14) against a relative rotation between the first (12) and the second axial end portion (14) of the outer sleeve (10).

2. Fastener (1) according to claim 1, the fastening section of which is arranged rotation-free, preferably completely rotation-free, at least with a subportion radially within the support sleeve (30) and is displaceable in the axial direction of the support sleeve (30) relative to the support sleeve (30).

3. Fastener (1) according to claim 1 or 2, the outer sleeve (10) of which comprises in the first axial end portion (12) a radial collar (20) and in the second axial end portion (14) opposite the first (12) a fixedly arranged screw sleeve (50), which comprises the screw-in portion in which a thread of the screw (80) is receivable.

4. Fastener (1) according to claim 3, the screw sleeve (50) of which comprises a radial outer contour at least two-stepped in the axial direction including a fastening portion (54) facing away from the support sleeve (30) and a telescopic portion (58) facing the support sleeve (30), wherein the telescopic portion (58) has a smaller radial extension than the fastening portion and an inner axial channel of the support sleeve (30).

5. Fastener (1) according to claim 4, in which the fastening portion (54) and the telescopic portion (58) of the screw sleeve (50) are connected with each other, preferably in a stepped manner via an axial abutment face (56).

6. Fastener (1) according to claim 4 or 5, in which an outer contour of the telescopic portion (58) is adapted in shape to an inner contour of a radial inner wall of the support sleeve (30), so that the support sleeve (30) blocks the screw sleeve (50) against rotation and the outer sleeve (10) is compressible in axial direction torsion-free about a longitudinal axis, preferably torsion-free about a rotation angle < 180° or almost completely torsion-free.

7. Fastener (1) according to one of the preceding claims, in which the support sleeve (30) provides an axial abutment face (56) in the direction of the second axial end portion (14) at the fastening portion, which limits an axial shortening of the outer sleeve (10) and an accompanying folding (16) transverse to a longitudinal axis (L) of the outer sleeve (10) by the screw connection.

8. Connection of at least a first (A) and a second component (B) with a fastener (1) according to one of the claims 1 to 7 in which a screw connection holds the components (A, B) and the fastener (1) together.

9. Connection according to claim 8, in which the at least one component (A) comprises a rotationally asymmetrical opening adapted to the rotationally asymmetrical circumferential contour of the outer sleeve (10), in which the outer sleeve (10) is arranged positive-lockingly against rotation.

10. Connection according to claim 8 or 9, in which the at least one first component (A) is held between a radial collar (20) and a folding (16) of the elastically deformable outer sleeve (10) and the at least one second component (B) is held between the radial collar (20) and a head of a screw (80) screwed into the fastener (1).

11. Connection method of at least one first component (A) having a rotationally asymmetric opening and at least one second component (B) with a fastener (1) according to one of the claims 1 to 7 **characterized by** the following steps:
i. inserting (S1) the fastener (1) into the opening of the at least one first component (A) so that the fastener is held in a positive-locking manner against rotation in the opening,
ii. arranging (S2) the at least one second component (B) with a fastening opening adjacent to the fastener (1) and
iii. screwing-in (S3) of a screw (80) into the fastener (1) and through the fastening opening and the opening of the components (A, B) until the first component (A) is fastened between a radial collar (20) and a folding (16) of the outer sleeve (10) and the second component (B) is fastened between a head of the screw (80) and the radial collar (20) of the outer sleeve (10).

12. Connection method according to claim 11, wherein, during screwing-in (S3) of the screw (80) into a fastening section in the second axial end portion (14) of the outer sleeve (10), the fastening section is positive-lockingly held against rotation in the support sleeve (30) and is displaced in the axial direction of the support sleeve (30) within the support sleeve (30).

13. Connection method according to claim 11 or 12, wherein, during screwing-in (S3), the outer sleeve (10) is shortened until the support sleeve (30) supports itself against an axial abutment face of the screw sleeve (50).

14. Connection method according to claim 11, 12 or 13, in which a thread-cutting or thread-tapping screw (80) is screwed into a fastening section of the outer sleeve.

15. Manufacturing method for a fastener (1) according to one of the claims 1 to 7, **characterized by** the following steps:
i. manufacturing (I) an outer sleeve (10) from an elastically deformable material having a rotationally asymmetric circumferential contour (18) by means of an injection molding method or an additive manufacturing method,
ii. manufacturing (II) a screw sleeve (50) by means of injection molding or an additive method and fastening (III) the screw sleeve (50) in the outer sleeve (10),
iii. manufacturing (VI) a rotationally asymmetric support sleeve (30) adapted in shape to the outer sleeve (10), which consists of a material having a lower deformability than the outer sleeve (10), by means of an injection molding method or an additive manufacturing method, and
iv. arranging (V) the support sleeve (30) in the outer sleeve (10).

16. Manufacturing method according to claim 15, in which at least the outer sleeve and the screw sleeve are manufactured in a two-component (2K) injection molding method.

17. Manufacturing method according to claim 15 or 16, in which the support sleeve and the screw sleeve are manufactured as a detachable composite, wherein the composite is realized by frictional engagement between the support sleeve and the screw sleeve or by destroyable connection webs.

## Revendications

1. Dispositif d'assemblage (1) à fonction d'amortissement, qui permet de relier au moins un premier composant et un second composant au moyen d'un raccord à vis, lequel présente les caractéristiques suivantes :
a) une douille extérieure (10) déformable de façon élastique avec une ouverture filetée à une première extrémité axiale (12) et avec une partie de fixation d'une vis à une seconde extrémité axiale (14) et
b) une douille d'appui (30), qui est disposée à l'intérieur de la douille extérieure (10) à la première extrémité axiale (12) par complémentarité de forme en contre-rotation par rapport à la douille extérieure, **caractérisé en ce que**
c) la douille extérieure (10) présente un contour périphérique (18) asymétrique en rotation au moins à la première extrémité axiale (12), qui permet d'établir une complémentarité de forme en contre-rotation dans une ouverture de composant (AO) adaptée au contour périphérique (18) de la douille extérieure (10), et
d) la douille d'appui (30) est asymétrique en rotation et est disposée à l'intérieur de la douille extérieure (10) à la première extrémité axiale (12) par complémentarité de forme en contre-rotation par rapport à la douille extérieure, de sorte que le contour périphérique (18) de la douille extérieure (10) déformable de façon élastique est appuyé au moins par endroits en conservant sa forme à la première extrémité axiale (12), et
e) la douille d'appui (30) est reliée par complémentarité de forme à la partie de fixation disposée fixement à la seconde extrémité axiale (14) pour résister à une rotation relative entre la première (12) et la seconde extrémité axiale (14) de la douille extérieure (10).

2. Dispositif d'assemblage (1) selon la revendication 1, dont la partie de fixation est disposée radialement au moins dans une zone partielle à l'intérieur de la douille d'appui (30) de façon à ne pouvoir tourner, de préférence de façon à ne pouvoir absolument pas tourner et est déplaçable par rapport à la douille d'appui (30) dans la direction axiale de la douille d'appui (30).

3. Dispositif d'assemblage (1) selon la revendication 1 ou 2, dont la douille extérieure (10) présente une collerette radiale (20) à la première extrémité axiale (12) et une douille filetée (50) disposée fixement à la seconde extrémité axiale (14) opposée à la première extrémité axiale (12), qui comprend la partie de fixation, dans lequel un filetage de la vis (80) peut être logé.

4. Dispositif d'assemblage (1) selon la revendication 3, dont la douille filetée (50) présente un contour extérieur radial au moins à deux étages dans la direction axiale, qui comprend une zone de fixation (54) tournée à l'opposé de la douille d'appui (30) et une zone télescopique (58) tournée vers la douille d'appui (30), dans lequel la zone télescopique (58) a une extension radiale plus faible que la zone de fixation et qu'un canal axial intérieur de la douille d'appui (30).

5. Dispositif d'assemblage (1) selon la revendication 4, dans lequel la zone de fixation (54) et la zone télescopique (58) de la douille filetée (50) sont reliées l'une à l'autre, de préférence graduellement moyennant une surface de contact axiale (56).

6. Dispositif d'assemblage (1) selon la revendication 4 ou 5, dans lequel un contour extérieur de la zone télescopique (58) épouse la forme d'un contour intérieur d'une paroi intérieure radiale de la douille d'appui (30), de sorte que la douille d'appui (30) empêche la douille filetée (50) de tourner et la douille extérieure (10) peut être compressible dans la direction axiale sans torsion autour d'un axe longitudinal, de préférence sans torsion autour d'un axe de rotation < 180° ou presque totalement sans torsion.

7. Dispositif d'assemblage (1) selon l'une des revendications précédentes, dans lequel la douille d'appui (30) fournit une surface de contact axiale (56) au niveau de la zone de fixation en direction de la seconde extrémité axiale (14), qui limite un raccourcissement axial de la douille extérieure (10) et un pliage (16) y étant associé transversalement à un axe longitudinal (L) de la douille extérieure (10) au moyen du raccord à vis.

8. Raccordement d'au moins un premier (A) composant et d'un second (B) composant avec un dispositif d'assemblage (1) selon l'une des revendications 1 à 7, dans lequel un raccord à vis solidarise les composants (A, B) et le dispositif d'assemblage (1).

9. Raccordement selon la revendication 8, dans lequel ledit composant (A) au moins présente une ouverture asymétrique en rotation adaptée au contour périphérique (18) asymétrique en rotation de la douille extérieure (10), dans lequel la douille extérieure (10) est disposée par complémentarité de forme en contre-rotation.

10. Raccordement selon la revendication 8 ou 9, dans lequel ledit premier composant (A) au moins est maintenu entre une collerette radiale (20) et un pliage (16) de la douille extérieure (10) déformable de façon élastique, tandis que ledit second composant (B) au moins est maintenu entre la collerette radiale (20) et une tête d'une vis (80) insérée dans le dispositif d'assemblage (1).

11. Procédé de raccordement d'au moins un premier composant (A) avec une ouverture asymétrique en rotation et d'au moins un second composant (B) avec un dispositif d'assemblage (1) selon l'une des revendications 1 à 7, **caractérisé par** les étapes suivantes :
i. Insertion (S1) du dispositif d'assemblage (1) dans l'ouverture dudit premier composant (A) au moins, de sorte que le dispositif d'assemblage est maintenu dans l'ouverture par complémentarité de forme en contre-rotation,
ii. Mise en place (S2) dudit second composant (B) au moins avec une ouverture de fixation adjacente au dispositif d'assemblage (1) et
iii. Vissage (S3) d'une vis (80) dans le dispositif d'assemblage (1) et à travers l'ouverture de fixation et l'ouverture des composants (A, B), jusqu'à ce que le premier composant (A) soit fixé entre une collerette radiale (20) et un pliage (16) de la douille extérieure (10) et que le second composant (B) soit fixé entre une tête de la vis (80) et la collerette radiale (20) de la douille extérieure (10).

12. Procédé de raccordement selon la revendication 11, dans lequel la partie de fixation est maintenue par complémentarité de forme en contre-rotation dans la douille d'appui (30) et se déplace à l'intérieur de la douille d'appui (30) dans la direction axiale de la douille d'appui (30) lors du vissage (S3) de la vis (80) dans une partie de fixation à la seconde extrémité axiale (14) de la douille extérieure (10).

13. Procédé de raccordement selon la revendication 11 ou 12, dans lequel la douille extérieure (10) est raccourcie lors du vissage (S3) jusqu'à ce que la douille d'appui (30) s'appuie sur une surface de contact axiale de la douille filetée (50).

14. Procédé de raccordement selon la revendication 11, 12 ou 13, dans lequel une vis autotaraudeuse ou à roulage de filets (80) est insérée dans une partie de fixation de la douille extérieure.

15. Procédé de fabrication d'un dispositif d'assemblage (1) selon l'une des revendications 1 à 7, **caractérisé par** les étapes suivantes :
i. la fabrication (I) d'une douille extérieure (10) à base d'un matériau déformable de façon élastique avec une contour périphérique (18) asymétrique en rotation à l'aide d'un procédé de moulage par injection ou d'un procédé de fabrication additive,
ii. la fabrication (II) d'une douille filetée (50) moyennant un moulage par injection ou un procédé additif et la fixation (III) de la douille filetée (50) dans la douille extérieure (10),
iii. la fabrication (VI) d'une douille d'appui (30) asymétrique en rotation épousant la forme de la douille extérieure (10), qui est constituée d'un matériau d'une moindre déformabilité que celui de la douille extérieure (10), à l'aide d'un procédé de moulage par injection ou d'un procédé de fabrication additive.
iii. la mise en place (V) de la douille d'appui (30) dans la douille extérieure (10).

16. Procédé de fabrication selon la revendication 15, dans lequel au moins la douille extérieure et la douille filetée sont fabriquées par un procédé de moulage par injection à 2 composants.

17. Procédé de fabrication selon la revendication 15 ou 16, dans lequel la douille d'appui et la douille filetée sont fabriquées sous la forme d'un assemblage amovible, dans lequel l'assemblage est réalisé moyennant une liaison par friction entre la douille d'appui et la douille filetée ou moyennant des nervures de raccordement destructibles.
